**Europäisches Patentamt**

**European Patent Office**

**Office européen des brevets**

(19)

(11) Veröffentlichungsnummer: **0 046 277**
**A1**

(12) # EUROPÄISCHE PATENTANMELDUNG

(21) Anmeldenummer: 81106317.1

(22) Anmeldetag: 13.08.81

(51) Int. Cl.³: **B 01 D 17/02**

(30) Priorität: **13.08.80 DE 3030668**

(43) Veröffentlichungstag der Anmeldung: **24.02.82**
**Patentblatt 82/8**

(84) Benannte Vertragsstaaten: **AT CH DE FR LI NL**

(71) Anmelder: **Passavant-Werke AG & Co. KG,**
**D-6209 Aarbergen 7 (DE)**

(72) Erfinder: **Loth, Robert, Dipl.-Ing., Im Stillen Winkel 5,**
**D-4811 Oerlinghausen 2 (DE)**

(74) Vertreter: **Glawe, Richard, Dr. Patentanwälte Dr. Richard**
**Glawe et al, Dr. Walter Moll, Dipl.-Ing. Klaus Delfs Dr.**
**Ulrich Mengdehl Dr. Heinrich Niebuhr Postfach 260 162,**
**D-8000 München 26 (DE)**

(54) **Vorrichtung zum Schwerkrafttrennen von Flüssigkeitsgemischen.**

(57) Die Vorrichtung zum Schwerkrafttrennen von Flüssigkeitsgemischen weist einen Abscheideraum (1) auf, in dem sich die Komponenten des Flüssigkeitsgemisches trennen können, eine Zulaufeinrichtung (3) mit mindestens einer in den Abscheideraum mündenden Zulauföffnung (3a, 3b) für das Flüssigkeitsgemisch und mindestens einen Ablauf (2) für eine der Komponenten des Flüssigkeitsgemisches. Um bei einer derartigen Vorrichtung auch bei engen Raumverhältnissen einen ausreichend langen Strömungsweg des Flüssigkeitsgemisches durch den Abscheideraum zu ermöglichen, ist die oder jede Zulauföffnung (3a, 3b) in der Nähe des oder jedes Ablaufs (2) angeordnet und so ausgerichtet, dass der aus ihr austretende Flüssigkeitsstrahl eine von der direkten Verbindungslinie zwischen Zulauf und Ablauf um mindestens 90° abweichende Strömungsrichtung hat. Vorteilhafterweise können zwei bezüglich einer vertikalen Mittelebene, die den Abfluss mittig schneidet, symmetrisch angeordnete Zulauföffnungen (3a, 3b) vorgesehen sein.

A 3

- 1 -

PASSAVANT-WERKE AG & Co. KG
6209 Aarbergen 7


Vorrichtung zum Schwerkrafttrennen von Flüssigkeitsgemischen
----------------------------------------------------


Beschreibung


Die Erfindung betrifft eine Vorrichtung zum Schwerkrafttrennen von Flüssigkeitsgemischen, insbesondere zum
Abscheiden von Leichtflüssigkeiten aus Wasser, mit einem
Abscheideraum, in dem sich die Komponenten des Flüssigkeitsgemisches trennen können, einer Zulaufeinrichtung
mit mindestens einer in den Abscheideraum mündenden Zulauföffnung für das Flüssigkeitsgemisch und mindestens
einem Ablauf für eine der Komponenten des Flüssigkeitsgemisches.

Derartige Vorrichtungen zum Trennen von Flüssigkeitsgemischen bewirken eine Trennung von Flüssigkeiten unterschiedlicher Dichte allein durch die Schwerkraft. Sie
werden angewendet, z. B. für die Trennung von Leichtflüssigkeiten wie Benzin, Benzol, Diesel- oder Heizöl von
Schmutzwasser. Solche Leichtflüssigkeiten müssen abge-

- 2 -

0046277

schieden werden, weil sie in Verbindung mit Luft explosive Dämpfe bilden können bzw. z. B. in Kläranlagen die zur Frischhaltung notwendige Sauerstoffaufnahme des Wassers verhindern.

Bei derartigen Vorrichtungen wird das Flüssigkeitsgemisch durch mindestens einen Zulauf in einen Abscheideraum gebracht, in dem es sich bei verringerter Strömungsgeschwindigkeit aufgrund der verschiedenen Dichte der Komponenten unter Einfluß der Schwerkraft aufspaltet, woraufhin eine der Komponenten oder beide durch geeignete Abläufe aus dem Abscheideraum abgezogen werden können.

Die Abscheidewirkung bzw. die Trennung der einzelnen Gemischkomponenten ist dabei umso besser, je länger der Weg, der vom Flüssigkeitsgemisch im Abscheideraum bei verringerter Strömungsgeschwindigkeit zurückgelegt wird, ist. Bei herkömmlichen Vorrichtungen zum Schwerkrafttrennen wurden deshalb Zulauf und Ablauf zum bzw. vom Abscheideraum an diametral gegenüberliegenden Seiten des Abscheideraumes angeordnet, um einen möglichst langen Weg zu erzielen.

Speziell bei engen Raumverhältnissen wird aber dadurch, daß das Flüssigkeitsgemisch den kürzesten Weg vom Zulauf zum Ablauf nimmt, eine unbefriedigende Abscheidewirkung erzielt. Dadurch wird oftmals das Nachschalten von Nachreinigern erforderlich.

Der Erfindung liegt die Aufgabe zugrunde, eine Vorrichtung zum Schwerkrafttrennen von Flüssigkeitsgemischen zu schaffen, mit der es auch bei engen Raumverhältnissen möglich ist, einen ausreichend langen Strömungsweg des Flüssigkeitsgemisches durch den Abscheidraum zu ermöglichen.

- 3 -

Diese Aufgabe wird bei einer Vorrichtung zum Schwerkrafttrennen der eingangs genannten Art dadurch gelöst, daß die oder jede Zulauföffnung in der Nähe des oder jedes Ablaufs angeordnet und so gerichtet ist, daß der aus ihr austretende Flüssigkeitsstrahl eine von der direkten Verbindungslinie zwischen Zulauf und Ablauf um mindestens $90^{o}$ abweichende Strömungsrichtung hat. Mit Nähe ist hier gemeint, daß in der Draufsicht der Zulauf und der Ablauf nahe beieinander liegen, z. B. in einer Hälfte des Abscheideraumes. Es ist aber von Vorteil, wenn auch in der Seitenansicht der oder die Zu- bzw. Abläufe nicht zu weit voneinander entfernt sind.

Durch diese auf den ersten Blick paradoxe Lösung, nämlich den Zulauf in der Nähe des Ablaufes anzuordnen, wird erreicht, daß das Flüssigkeitsgemisch aufgrund seiner Austrittsrichtung aus dem Zulauf zuerst vom Ablauf weg zur gegenüberliegenden Seite des Abscheideraumes fließt und dort zum Ablauf hin umkehrt. Der Strömungsweg wird also nahezu verdoppelt. Um einen direkten Strömungskurzschluß zu vermeiden ist es lediglich notwendig, daß die Zulaufrichtung mindestens $90^{o}$ von der direkten Verbindungslinie zwischen Zulauf und Ablauf abweicht. Dies kann entweder durch eine geeignete Ausrichtung der Zulauföffnungen oder durch ein Umlenken des Flüssigkeitsstromes nach dem Austritt erreicht werden.

Vorzugsweise ist bei in Bodennähe angeordnetem Ablauf die Strömungsrichtung des zulaufenden Flüssigkeitsgemisches im wesentlichen nach oben gerichtet.

Bei im Querschnitt runden und mit Verhältnis zum Durchmesser hohen Abscheideräumen wird der Zulauf vorzugsweise im oberen Drittel des Abscheideraumes angeordnet und mit einer nach oben gerichteten Zulauföffnung versehen.

Bei in Wandnähe angeordnetem Zulauf ist es von Vorteil, wenn die Strömungsrichtung des zulaufenden Flüssigkeitsgemisches beim Austritt aus dem Zulauf im wesentlichen parallel zur Wandung des Abscheideraumes verläuft. Die Richtung des Zulaufstromes kann durch düsenartig verengte Mündungen des Zulaufs präzisiert werden.

Um das Volumen des Abscheideraumes optimal auszunutzen, ist es von Vorteil, eine Doppelanordnung von Zuläufen zu wählen, die symmetrisch bezüglich einer vertikalen Mittelebene, die den Abfluß mittig schneidet, angeordnet ist. Durch diese Anordnung der Zuläufe bzw. des Ablaufes bilden sich im Abscheidevolumen zwei gegenläufige im wesentlichen vertikale Strömungswalzen aus, die im Berührungsbereich, d. h. in der vertikalen Symmetrieebene gleichgerichtet sind und somit keine Verwirbelungen erzeugen könne, die erneute Tröpfchenverteilung und damit Wiedervermischung der Gemischkomponenten verursachen würde. Da die beiden Strömungswalzen in der Draufsicht nebeneinander liegen, behindern sich die aus ihnen aufsteigenden Teile der leichteren Flüssigkeit nicht gegenseitig.

Im folgenden wird eine bevorzugte erfindungsgemäße Ausführungsform anhand der Figuren näher beschrieben. Es zeigen:

Fig. 1 einen senkrechten Schnitt durch eine erfindungsgemäße Abscheidevorrichtung;

Fig. 2 einen Horizontalschnitt durch die Vorrichtung gemäß Fig. 1;

Fig. 3 den wesentlichen Strömungsverlauf in der Seitenansicht; und

Fig. 4 den wesentlichen Strömungsverlauf in Draufsicht.

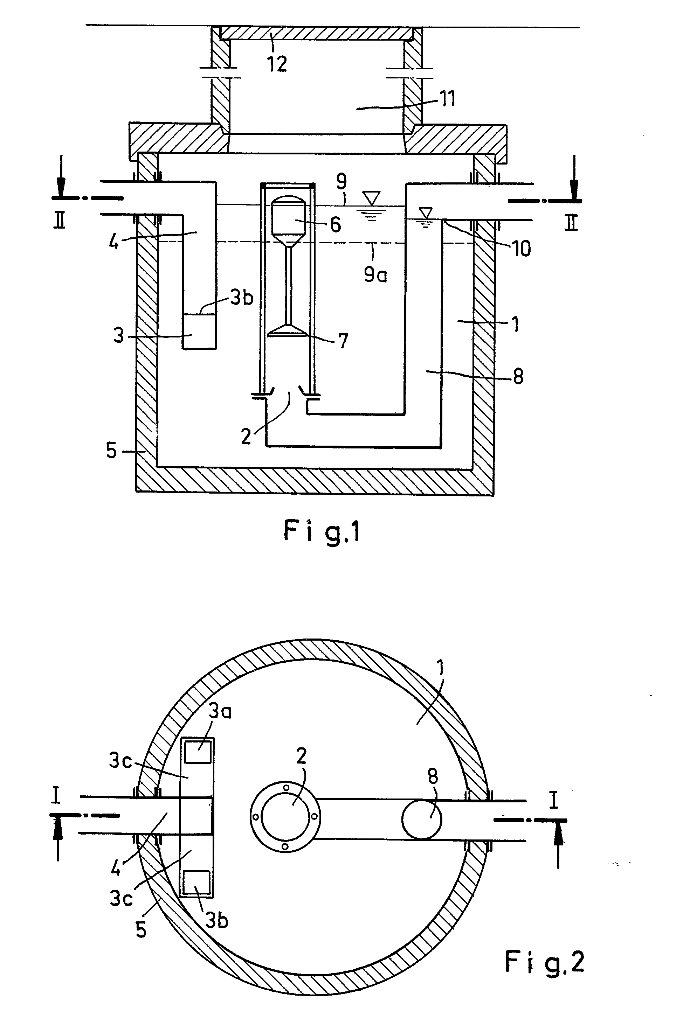

Wie aus Fig. 1 und 2 zu sehen ist, weist die erfindungsgemäße Vorrichtung einen flüssigkeitsdicht umschlossenen Abscheideraum 1 auf, in den das Flüssigkeitsgemisch durch ein Rohr 4 und die Zulaufanordnung 3 eingebracht wird. Das Flüssigkeitsgemisch tritt nach oben parallel zur Wandung 5 aus der Zulaufanordnung 3 aus und entmischt sich daraufhin unter dem Einfluß der Schwerkraft im Abscheideraum 1. Das in den Abscheideraum eingetretene Flüssigkeitsgemisch bewirkt ein Ansteigen des Flüssigkeitspegels 9 im Abscheideraum 1, wodurch auch der Pegel im über den Abfluß 2 mit dem Abscheideraum 1 verbundenen Rohr 8 ansteigt und die im Rohr 8 angestiegene Flüssigkeit über die Überlaufkante 10 abläuft. Dadurch wird Flüssigkeit durch den Abfluß 2 aus dem Abscheidevolumen abgezogen. Der Abscheideraum 1 ist über einen Wartungsschacht 11, der mit einem Deckel 12 abgeschlossen ist, zugänglich . Die Ausführungsform  von Fig. 1 und 2 weist zudem ein automatisches Absperrventil 6, 7 auf, das in Abhängigkeit von der abgeschiedenen Menge der leichteren Flüssigkeit den Ablauf 2 mittels des Ventiltellers 7 verschließen kann. Die Steuerung des Verschlusses wird dadurch bewirkt, daß der Schwimmer 6 im wesentlichen auf der Oberfläche 9a der schwereren Flüssigkeit schwimmt und in der leichteren Flüssigkeit sinkt. Sobald eine entsprechende Menge der leichteren Flüssigkeit sich auf der Oberfläche der schwereren Flüssigkeit angesammelt hat, sinkt der Schwimmer 6 in der leichteren Flüssigkeit so tief ab, daß der Ventilteller 7 auf einem Ventilsitz auf dem Ablauf 2 aufsitzt und diesen verschließt.

- 6 -

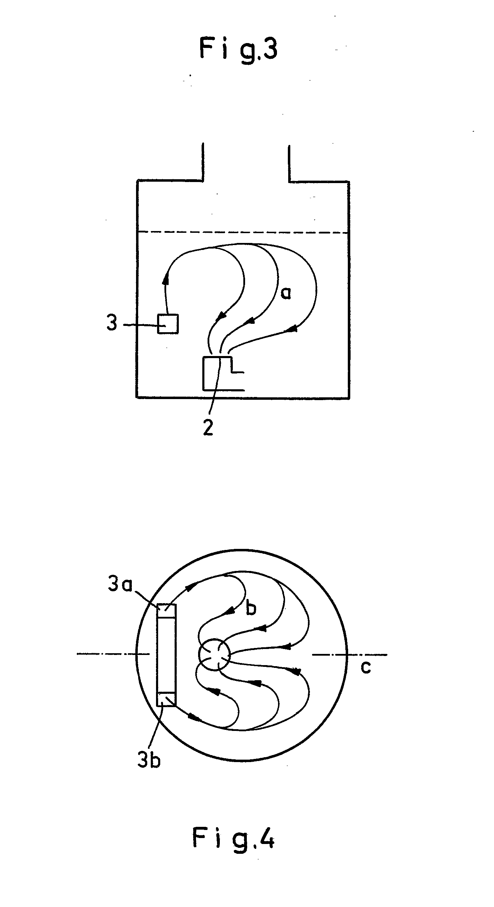

Die Zulaufanordnung 3 ist in der gezeigten Ausführungsform von Fig. 1 und 2 in der Nähe des Ablaufs 2 angeordnet und weist zwei Arme 3c auf, die sich im wesentlichen quer zum Zuführungsrohr 4 erstrecken und jeweils eine nach oben gerichtete Zulauföffnung 3a, 3b für das Flüssigkeitsgemisch aufweisen. Durch diese erfindungsgemäße Anordnung von Zu- bzw. Ablauf und die Austrittsströmungsrichtung wird bewirkt, daß das Flüssigkeitsgemisch im wesentlichen den in Fig. 3 gezeigten vertikalen Strömungsweg a nimmt.

Die erfindungsgemäße symmetrische Anordnung der Zulauföffnungen 3a, 3b bezüglich der Mittelebene c des Abscheidevolumens bewirkt, daß das Flüssigkeitsgemisch im wesentlichen den in Fig. 4 gezeigten horizontalen Strömungsverlauf b nimmt. In der Nähe der Mittelebene c verlaufen die Strömungswege der beiden sich ausbildenden Strömungswalzen laminar, so daß eine Verwirbelung und damit eine neue Vermischung der Flüssigkeitskomponenten vermieden wird.

Auch wenn die Erfindung hier nur in Bezug auf einen Leichtflüssigkeitsabscheider beschrieben worden ist, so ist dem Fachmann doch geläufig, daß sich diese vorteilhaften Strömungswege, wie sie in Fig. 3 und 4 gezeigt sind, auch z. B. bei Schwerflüssigkeitsabscheidern erreichen lassen, wenn die erfindungsgemäße Anordnung der Austrittsöffnungen beibehalten, aber die Ausströmrichtung von oben nach unten gewählt ist, wenn der Ablauf in der Nähe der Flüssigkeitsoberfläche angeordnet ist.

0046277

- 1 -

PASSAVANT-WERKE AG & CO. KG
6209 Aarbergen 7

Vorrichtung zum Schwerkrafttrennen von Flüssigkeitsgemischen

------------------------------------------------

Patentansprüche

1.   Vorrichtung zum Schwerkrafttrennen von Flüssigkeitsgemischen, insbesondere zum Abscheiden von Leichtflüssigkeiten aus Wasser, mit einem Abscheideraum, in dem sich
die Komponenten des Flüssigkeitsgemisches trennen können, einer Zulaufeinrichtung mit mindestens einer in
den Abscheideraum mündenden Zulauföffnung für das Flüssigkeitsgemisch, und mindestens einem Ablauf für eine
der Komponenten des Flüssigkeitsgemisches, dadurch g e -
k e n n z e i c h n e t , daß die oder jede Zulauföffnung (3a, 3b) in der Nähe des oder jedes Ablaufes (2)
angeordnet und so gerichtet ist, daß der aus ihr
austretende Flüssigkeitsstrahl eine von der direkten
Verbindungslinie zwischen Zulauf und Ablauf um mindestens 90$^{\circ}$ abweichende Strömungsrichtung hat.

2.   Vorrichtung nach Anspruch 1, dadurch g e k e n n - z e i c h n e t , daß bei in Bodennähe angeordnetem Ablauf die Strömungsrichtung des zulaufenden Flüssigkeitsgemisches im wesentlichen nach oben gerichtet ist.

3.   Vorrichtung nach Anspruch 1 oder 2, dadurch g e - k e n n z e i c h n e t , daß die Zulauföffnung (3a, 3b) im oberen Drittel des Abscheideraumes (1) angeordnet ist.

4.   Vorrichtung nach Anspruch 1 mit einem in Wandnähe angeordneten Zulauf, dadurch g e k e n n z e i c h - n e t , daß die Strömungsrichtung des zulaufenden Flüssigkeitsgemisches beim Austritt aus den Zulauföffnungen (3a, 3b) im wesentlichen parallel zur Wandung (5) des Abscheideraumes verläuft.

5.   Vorrichtung nach den Ansprüchen 1 bis 4, dadurch g e k e n n z e i c h n e t , daß die Zulauföffnungen (3a, 3b) eine düsenartig verengte Mündung aufweisen.

6.   Vorrichtung nach den Ansprüchen 1 bis 5, dadurch g e k e n n z e i c h n e t , daß zwei bezüglich einer vertikalen Mittelebene (c), die den Abfluß (2) mittig schneidet, symmetrisch angeordnete Zulauföffnungen (3a, 3b) vorgesehen sind.

7.   Vorrichtung nach Anspruch 1, dadurch g e k e n n - z e i c h n e t , daß der horizontale Abstand eines jeden Zulaufes vom jeweils nächstliegenden Ablauf den halben Durchmesser bzw. die halbe Seitenlänge des Abscheideraumes nicht übersteigt.

8.   Vorrichtung nach Anspruch 1, dadurch g e k e n n - z e i c h n e t , daß der vertikale Abstand eines jeden Zulaufes vom jeweils nächstliegenden Ablauf geringer ist als die halbe Füllhöhe (9) des Abscheideraumes.

0046277

1/2

Fig.1

Fig.2

Fig.3

Fig.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 794 583 (RHODES, H.M.)<br><br>* Figur 1; Spalte 2, Zeilen 18 bis 30 *<br><br>-- | 1,2 |
| A | US - A - 3 489 680 (SNAVELY, E.S) | |
| A | DE - A - 2 639 202 (BUDERUS AG) | |
| A | FR - A - 2 413 111 (PASSAVANT-WERKE)<br><br>& DE - A - 2 800 036 | |
| A | US - A - 3 471 018 (SLIEPCEVICH C.M. et al.)<br><br>& DE - A - 1 937 397 | |

KLASSIFIKATION DER ANMELDUNG (Int. Cl.³)

B 01 D 17/02

RECHERCHIERTE SACHGEBIETE (Int. Cl.³)

B 01 D 17/02
B 01 D 17/00

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 25.11.1981 | CECCHINI |